Europäisches Patentamt

European Patent Office

Office européen des brevets

(11) Publication number: **0 029 812**
**A1**

(12) **EUROPEAN PATENT APPLICATION**

(21) Application number: **80830088.3**

(22) Date of filing: **30.10.80**

(51) Int. Cl.³: **H 01 S 3/02**
**H 01 S 3/04**

(30) Priority: **26.11.79 IT 3620679 U**

(43) Date of publication of application:
**03.06.81 Bulletin 81/22**

(84) Designated Contracting States:
**DE FR GB NL SE**

(71) Applicant: **SELENIA INDUSTRIE ELETTRONICHE**
**ASSOCIATE S.p.A.**
**Via Tiburtina, KM 12.4**
**I-00131 Roma(IT)**

(72) Inventor: **Tranquilli, Angelo**
**Vicolo di Via Gregoriana, 1**
**I-00044 Frascati, Roma(IT)**

(72) Inventor: **Parboni, Claudio**
**Via Dom Minzoni, 5**
**I-00047 Grottaferrata, Roma(IT)**

(72) Inventor: **Penco, Eugenio**
**Via Bevignani, 12**
**Roma(IT)**

(54) **Rigid support for laser devices.**

(57) The invention consists of an anchoring support (3) for laser devices in which the laser rod (5) is contained in a rod-holder (2) preferably of steel with a low coefficient of expansion or invar, firmly anchored to a base plate (4) preferably of granite which is the same as that which is also used to support the mirrors.

FIG. 1

EP 0 029 812 A1

RIGID SUPPORT FOR LASER DEVICES

This invention is concerned with a rigid support for laser devices.

In particular by means of this invention a support device for the laser rod is realized which isolates the rod itself from all movements, especially of thermic origin, which could cause deterioration of the laser operation.

As is known the action of the laser is typically linked to the precision and stability of the alignment of the two mirrors which form the resonant cavity and to the precision with which these in their turn are aligned with the active element. The axis which ideally unites the two mirrors and passes through the centre of the active element is called the system optical axis. This axis, in order to obtain the maximum output performance, must obviously be perpendicular to the two mirrors while with respect to the active element (whether solid or gaseous) it must be either perpendicular or respect a precise incidence (Brewster angle). Any variation from this condition degrades the performance of the source. In the solid-state lasers the active element is a rod of material which must be supported together with the illuminating lamp and pump cavity (whether reflecting or diffused) for which reason it is necessary to make use of differently constructed containers.

The present tendency in the environment of industrial applications is to realize a body of transparent plastic which has typically two advantageous features; the first concerns the low cost of realization, the second is the elimination of the problem of insulating the lamp trigger.

In this solution the rod, by means of its support, is directly anchored to the plastic body.

This is not technically correct in as far as the optical axis is fixed onto a body not completely rigid (plastic) in which the coefficient of expansion is contained within 80-160 p.p.m./°C.

Since part of the power fed into the lamp ($\sim$5%) must be dissipated by the plastic container, especially at high pump power ($>$ 6kw) stresses are created which lead to a misalignment of the rod with respect to the mirrors. This misalignment causes a reduction of the power. Further, working under conditions of poor alignment the competition between the modes of oscillation results in a fluctuation of the output power itself and the divergence of the beam.

Obviously this type of system is very sensitive to variations of temperature and therefore cannot be used in military systems whose field of application typically varies from - 40° to+55°C.

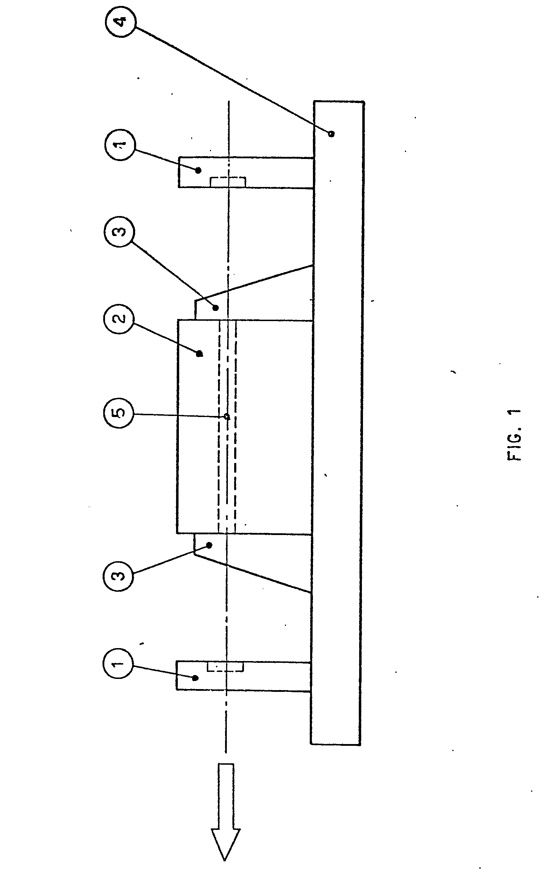

In the solution proposed in this invention the laser rod is anchored by means of a rod holder of a suitable material to the same support as that which supports the mirrors. The invention will now be described with reference to figure 1 in which (1) indicates the mirrors, (2) the rod-holder, (3) the relative supports,(4) the stiffened base and (5) the laser rod. The laser beam is shown by the arrow.

Therefore in this solution the whole structure which supports the lamp, the pump cavity and the refrigeration circuit forms a part independent of the rod, and all its movements whether of thermic origin or not are damped by the O ring holding the refrigeration liquid.

In this way every part of the container is completely separated from the optical axis of the laser, thus rendering the construction free of certain requirements which were formerly of first importance such as robustness (since it also had to support the rod) and therefore large size and the necessity of having a high heat dissipation coefficient to diminish the movements of the container itself.

The invention in question considerably improves the stability of high power solid-state lasers and allows the construction of sources with high characteristics, even at $TEM_{00}$, stable in time. Further, having rendered the optical axis independent of the container, it makes possible the use of high powers for feeding the lamp, something which was impossible with the configurations in use up to the present time due to the stresses which the container undergoes and which have repercussions on the performance of the source.

A typical material for the base plate is granite whose coefficient of expansion is $\sim$ 1 p.p.m./°C.

The rod is anchored to the granite support by means of a rod-holder which may be made of steel with a low coefficient of expansion on possibly invar (< 1 p.p.m./°C).

CLAIMS

1. Rigid support for laser devices characterized by the fact that the laser rod is anchored to the same support as that which supports the mirrors and comprises a base plate of material with a low expansion coefficient on which the mirrors are fixed together with an anchoring element containing the laser-rod firmly fixed to the said base plate.

2. Rigid support for laser devices characterized by the fact that the material forming the said base plate is granite.

3. Rigid support for laser devices characterized by the fact that the said anchoring element is made of steel with a low expansion coefficient or of invar.

FIG. 1

| Category | Citation of document with indication, where appropriate, of relevant passages | Relevant to claim | CLASSIFICATION OF THE APPLICATION (Int. Cl.³) |
|---|---|---|---|
| | **DOCUMENTS CONSIDERED TO BE RELEVANT** | | |
| X | US - A - 4 157 802 (WILLIAM G. MAY Jr.) <br><br> * Abstract; column 1, lines 1-9, 14-28; column 2, lines 16-38, 53-60, 65-68; claims 1,14 and figures 1-2 * <br><br> -- | 1,3 | H 01 S 3/02 <br> 3/04 |
| X | GB - A - 1 246 801 (C.A. PARSONS & COMP. LTD. ) <br><br> * Page 1, lines 28-32; figure 1 * <br><br> -- | 1 | |
| X | FR - A - 2 085 314 (AGENCE NATIONALE DE VALORISATION DE LA RECHERCHE) <br><br> * Figure 1 * <br><br> -- | 1 | **TECHNICAL FIELDS SEARCHED (Int. Cl.³)** <br><br> H 01 S 3/02 <br> 3/04 <br> 3/045 <br> 3/05 |
| X | DE - B - 1 292 767 (SIEMENS AG) <br><br> * Column 3, lines 20-33; figure 1 * <br><br> -- | 1 | |
| | US - A - 3 781 709 (OTMAR HINTRINGER) <br><br> * Figure 1; column 1, lines 13-27; column 2, lines 15-21 * <br><br> -- | 1 | |
| | FR - A - 2 119 825 (COMMISSARIAT A L'ENERGIE ATOMIQUE) <br><br> * Page 2, lines 10-19; page 5, lines 14-19 and figure 1a * <br><br> -- <br><br> ./. | 1,3 | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 29-01-1981 | FARNESE |

## EUROPEAN SEARCH REPORT

**European Patent Office**

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | US - A - 3 619 811 (DONALD B. KAISER) <br><br> * Figure 1; claim 1 * <br><br>-- | 1 | |
| | BE - A - 691 188 (SPECTRA-PHYSICS) <br><br> * Page 3, lines 23-28; page 6, lines 13-19; figures 4-7 * <br><br>---- | 1,3 | |

TECHNICAL FIELDS SEARCHED (Int. Cl. 3)

EPO Form 1503.2   06.78